Europäisches Patentamt

European Patent Office

Office européen des brevets

(11) Publication number: **0 180 326**
A2

# (12) EUROPEAN PATENT APPLICATION

(21) Application number: **85306911.0**

(22) Date of filing: **27.09.85**

(51) Int. Cl.⁴: **B 21 B 13/14,** B 21 B 31/07

(30) Priority: **02.10.84 US 656959**

(43) Date of publication of application: **07.05.86**
**Bulletin 86/19**

(84) Designated Contracting States: **DE FR GB IT SE**

(71) Applicant: **MORGAN CONSTRUCTION COMPANY,**
**15 Belmont Street, Worcester Massachusetts 01605 (US)**

(72) Inventor: **Woodrow, Harold E., 100 Green Street,**
**Northboro Mass. 01532 (US)**

(74) Representative: **Sanders, Peter Colin Christopher et al,**
**BROOKES & MARTIN High Holborn House 52/54 High**
**Holborn, London WC1V 6SE (GB)**

(54) **Rolling mill roll stand.**

(57) In a rolling mill roll stand, a bearing arrangement for a rotatable element such as for example a roll shaft carrying an overhung work roll, or a straddle mounted roll. The bearing arrangement includes first and second bearing assemblies supporting the rotatable element at spaced locations along the length thereof. At least one of the bearing assemblies includes separate tandem bearings mounted on a carrier member. The tandem bearings are capable of self adjusting movement relative to the carrier member in response to changes in the slope of the rotatable element occasioned by rolling loads and the carrier member is also capable of self adjusting movement in response to deflection of the rotatable element.

ROLLING MILL ROLL STAND

This invention relates generally to rolling mill roll stands, and is concerned in particular with overhung rolling mill stands of the type employed in the single strand rolling of products such as steel rods and bars.

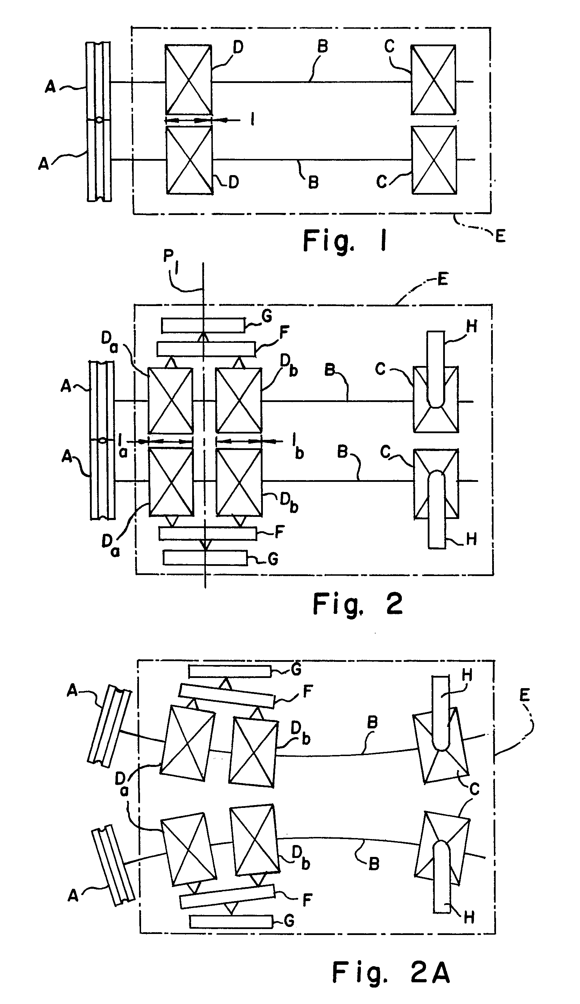

In the conventional overhung mill stand shown diagrammatically in Figure 1, the work rolls A comprise relatively narrow grooved discs mounted at the ends of the roll shafts B, with the shaft bearings C, D being arranged entirely on the inboard side of the rolls within a housing E. With this mill configuration, a major portion of the rolling load is absorbed by the bearings D located nearest to the work rolls. This type of mill stand is highly advantageous in that it allows operating personnel to quickly replace worn or cracked work rolls without having to disturb the roll shafts and their bearings.

Preferably, small diameter work rolls are employed in order to maximise product elongation while minimising product spread. However, in order to accommodate the smaller diameter work rolls, the diameters of the roll shafts and their bearings must also be decreased correspondingly. During rolling, as shown schematically to a greatly exaggerated degree in Figure 1A, the rolling forces $F_r$ on the work rolls A will combine with the reactive forces $F_c$, $F_d$ of the bearings C, D to bow the shaft B. As the shaft bows, it undergoes both deflection accompanied by changes in slope. As herein employed, the term "deflection" refers to the lateral distance "x" that the shaft axis is shifted from its normal unstressed location, and the term "slope" refers to the angle "o" formed between a tangent to the bowed shaft and a line parallel to the unstressed shaft axis. The extent of shaft deflection "x" and the degree of shaft slope "o" will vary from point to point along the shaft. Shaft bowing imposes a practical limit on the permissible axial length "l" of the bearings, which combined with the limitations imposed on bearing diameters by the use of smaller work rolls, limits the capacity of the mill to handle heavy rolling loads.

Thus, in the past, overhung mill stands have been employed mostly in finishing trains, where the rolling loads are relatively light in comparison to the rolling loads in the roughing and intermediate trains.

Recently, however, there has been a growing tendency on the part of mill operators to finish roll certain products at lower temperatures in order to achieve improved metalurgical properties. The increased rolling loads which accompany lower temperature rolling exceed the limited capacity of conventional overhung mill stands. Consequently, a number of attempts have been made at increasing the capacities of such mills. For example, in the arrangement described in U.S. Patent No. 4,457,155 (Eibe), the roll shafts are reinforced with large diameter back up rolls. This arrangement is useful in bar mills, where the work rolls rotate at relatively modest speeds. In a high speed rod mill, this arrangement would cause a rapid breakdown of the backup roll surfaces and the roll shaft surfaces, necessitating interruption of production until costly replacement parts are installed. In U.S. Patent No. 4,446,712 (Stone et al), backup rolls are employed in direct contact with the work rolls. Here again, breakdown of the backup roll surface would be accelerated to an unacceptable extent by exposure to abrasive mill scale. In still another attempt at increasing the rolling capacity of an overhung mill stand, as shown in U.S. Patent No. 4,423,612 (Uppaluri), additional bearings are applied to the roll shafts on the outboard side of the work rolls. These additional outboard bearings must be removed and then reinstalled each time worn or cracked work rolls are replaced, thus significantly complicating the work of operating personnel, and also prolonging unproductive and costly mill down time. The additional outboard bearings and their supporting housings also make it much more difficult to adjust the parting between the work rolls.

A compound bearing structure for supporting a rotatable shaft is disclosed in U.S. Patent 1,685,751.

The primary objective of the present invention is to achieve a significant increase in the rolling capacity of an overhung rolling mill stand, while avoiding the above-described disadvantages and drawbacks of the prior art.

In a very basic sense, as depicted diagrammatically in Figure 2, the overhung rolling mill stand of the present invention may be described as also having work rolls A mounted at the ends of roll shafts B. The opposite ends of the roll shafts are rotatably supported by first bearings C, whereas tandem pairs of second bearings $D_a$, $D_b$ are arranged adjacent to and on the inboard side of the work rolls. The bearings are again enclosed within a housing E. The tandem second bearings are mounted on carrier members F which in turn are mounted on supports G. The first bearings C are supported by carrier members H. This system provides for independent self adjusting movement between the second tandem bearings $D_a$, $D_b$ and their respective carrier members F, between the carrier members F and their respective supports G, and between the first bearings C and their respective carrier members H.

All of these self adjusting movements occur about parallel axes which extend transversely with respect to the axes of the roll shafts B. Means are provided for simultaneously adjusting the supports G and the carrier members H associated with each shaft in opposite directions relative to the mill pass line in order to adjust the parting between the work rolls A.

During rolling, as shown in Figure 2A, the tandem second bearings $D_a$, $D_b$ undergo self adjusting movements relative to their respective carrier members F, and the first bearings C undergo similar self adjusting movements relative to their respective carrier members H.

Additionally, the carrier members F undergo self adjusting movements relative to their supports G. The net result is that the second tandem bearings freely accommodate both shaft deflection and changes in shaft slope, while the first bearings C freely accommodate changes in shaft slope (there being no shaft deflection at these points). The carrier members F are adjustable about axes contained in a reference plane $P_1$, and plane $P_1$ is preferably located with respect to the tandem second bearings $D_a$, $D_b$ so as to distribute the rolling load equally therebetween.

Because the tandem second bearings $D_a$, $D_b$ can freely accommodate changes in both shaft deflection and slope, their combined axial lengths $l_a$, $l_b$ can be made to exceed the axial lengths l of the single bearings D, with the results that the rolling capacity of the mill can be increased by as much as 90% as compared with conventional arrangements of the type shown in Figure 1. This advantage is realised without resorting to the backup rolls or outboard bearings which characterise prior art attempts at increasing rolling capacity.

The present invention will now be described in greater detail with reference to the accompanying drawings, wherein:

Figure 1 is a diagrammatic representation of a conventional overhung mill stand;

Figure 1A is a diagrammatic representation of the effects of rolling loads on a roll shaft;

Figures 2 and 2A are diagrammatic representations of an overhung mill stand in accordance with the present invention;

Figure 3 is a sectional view in elevation showing an overhung mill stand in accordance with the present invention;

Figure 4 is an end view of the roll stand shown in Figure 3, taken along line 4-4 of Figure 3;

Figures 5, 6, 7 and 8 are sectional views taken respectively on lines 5-5, 6-6, 7-7 and 8-8 of Figure 3;

Figure 9 is a diagrammatic illustration of a modification to the mill stand depicted in Figures 3-8; and

Figure 10 is a diagrammatic illustration of a straddle mounted mill in accordance with the present invention.

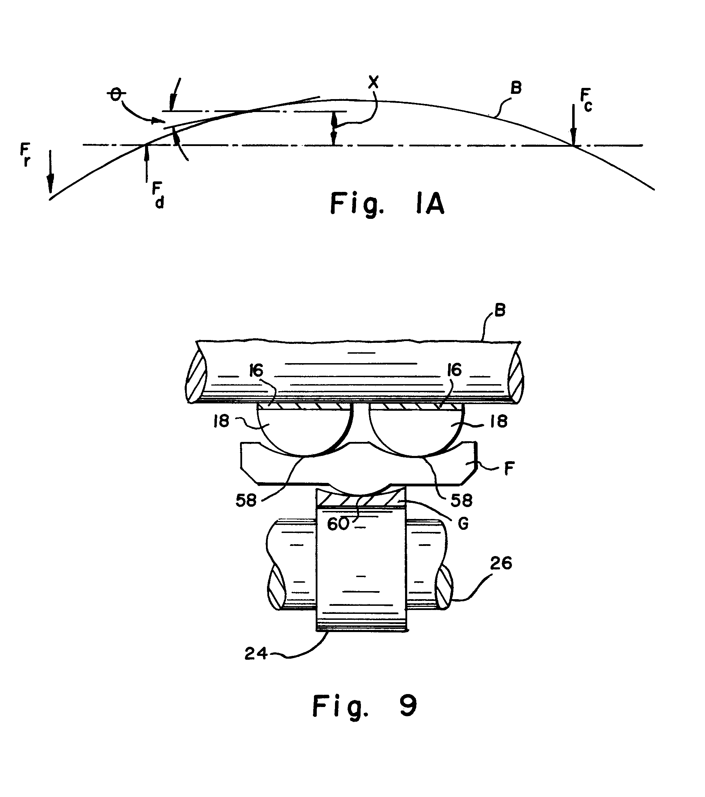

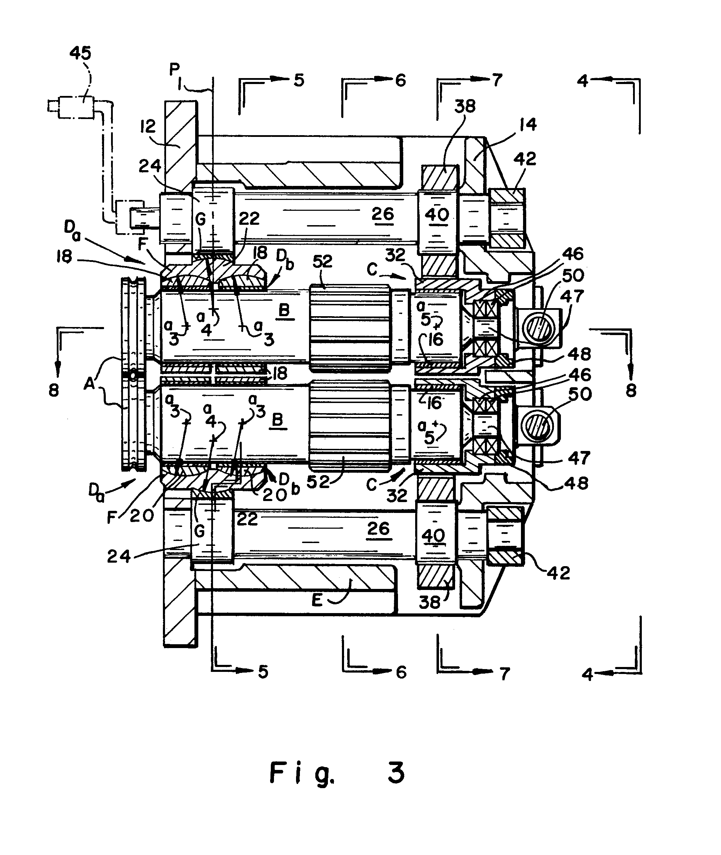

With reference to Figures 3-8, an overhung mill stand in accordance with the present invention is shown comprising a housing E closed at its front and rear ends respectively by housing plates 12 and 14.

Roll shafts B are contained within the housing E. Ends of the shafts B protrude through the front housing plate 12 to receive work rolls A. Although not shown, it will be understood that the work rolls are removably mounted on the shaft ends by means well known to those skilled in the art.

The roll shafts B are rotatably supported at locations adjacent to their opposite ends by first bearings C. Tandem second bearings $D_a$, $D_b$ rotatably support the roll shafts at locations adjacent to and directly inboard of the work rolls A. The bearings C, $D_a$ and $D_b$ are preferably of the sleeve type, each having a cylindrical bushing 16 surrounding a cylindrical shaft portion. Such bearings are ideally suited for the high rotational speeds encountered in modern day finishing mills, which currently have the ability to finish roll steel rod products at speeds on the order of 100 meters/sec.

The bushings 16 of the tandem second bearings $D_a$, $D_b$ are contained in separate bearing chocks 18. The chocks 18 are provided with externally protruding cylindrically convex bosses 20 which are slidably received in cylindrical concavities in the inner surfaces of associated carrier members F. The exterior surfaces of the carrier members in turn are provided with cylindrically convex bosses 22 which are slidably received in cylindrical concavities in the inner surface of associated saddle-type supports G. The supports G are externally configured to be carried on first eccentrics 24 formed on roll parting adjustment shafts 26. The roll parting adjustment shafts 26 extend in parallel relationship with the roll shafts B, their ends being journalled for rotation in the front and rear housing plates 12, 14.

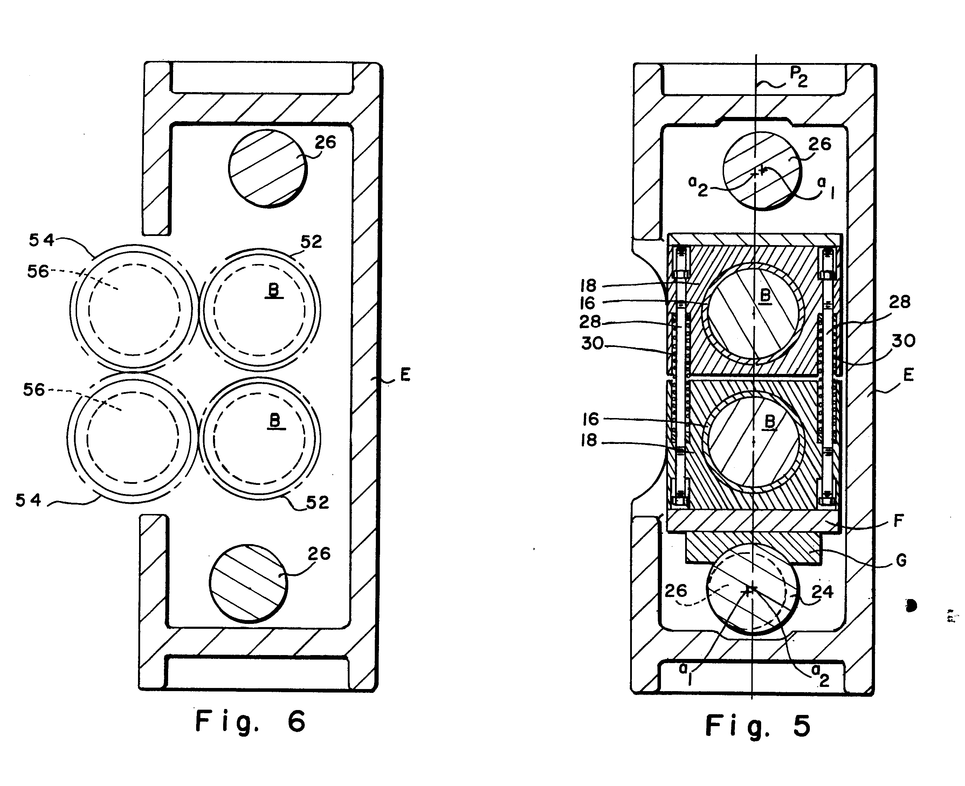

As can be best seen in Figure 5, the axis $a_1$ of shafts 26 are oppositely offset by equal distances from a reference plane $P_2$ containing the roll shaft axes, with the eccentric centers $a_2$ being contained in the plane $P_2$. The chocks 18 are appropriately drilled to receive connecting bolts 28 and compression springs 30. The springs 30 resiliently urge the chocks apart and thus ensure that the above-described bosses remain rotatably seated in their respective concavities.

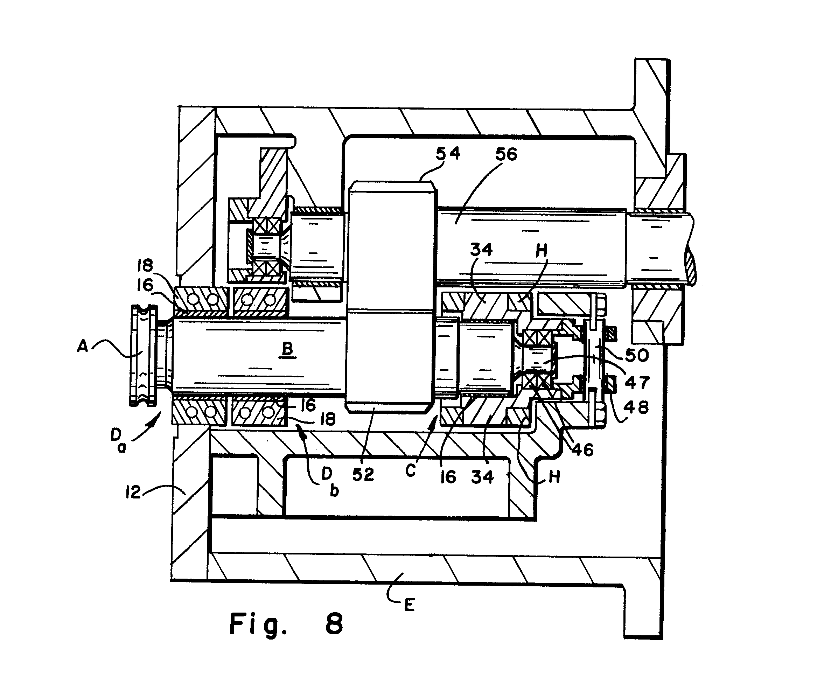

The bushings 16 of the first bearings C are contained in their own chocks 32. As can best be seen in Figure 7, the chocks 32 have laterally protruding trunnions 34 received in openings in carrier members H. The carrier members H are in turn secured to collars 38 in which are journalled second eccentrics 40 on the roll parting adjustment shafts 26.

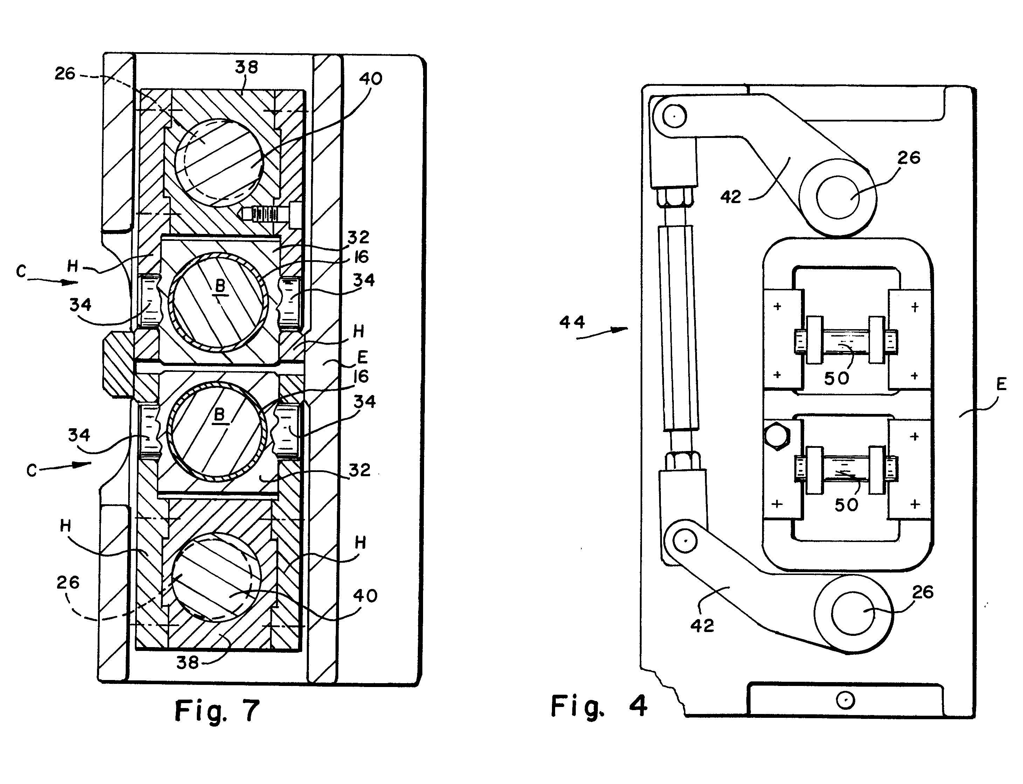

The rear ends of the roll parting adjustment shafts 26 protrude through the rear housing plate 14. As can best be seen in Figure 4, these rearwardly protruding shaft ends are mechanically interconnected by means of levers 42 and a turnbuckle link assembly 44. Initial adjustment of the turnbuckle link assembly 44 will cause the roll parting adjustment shafts 26 and their eccentrics 24, 40 to rotate in opposite directions until they differ in phase by $180^{\circ}$, thereby centralising the parting between the work rolls A before operational installation.

Roll parting adjustment is obtained by simultaneously rotating the shafts 26 in the same directions. This may be achieved by any convenient means, such as for example a removable crank 45 (see Figure 3) engageable with the exposed front end of the upper shaft 26. As the shafts 26 rotate in the same direction, their eccentrics 24, 40 will cooperate respectively with the saddle supports F and the collars 38 to shift the roll shafts B towards or away from one another.

The roll shafts B are axially located by means of thrust bearings 46 surrounding reduced diameter shaft end extensions 47. The thrust bearings are retained in the chocks 32 by means of end caps 48, the latter being detachably fixed to brackets on the housing rear plate 14 by means of cross pins 50.

As can be seen in Figure 6, the roll shafts B each carry gears 52 which mesh with gears 54 on parallel intermediate drive shafts 56. The gears 54 are intermeshed, and one of the intermediate drive shafts 56 is driven by conventional means (not shown).

During operation of the roll stand, it will be understood that lubricating oil is applied liberally to the shaft bearings as well as to their adjustable supports and the roll parting adjustment mechanisms. The components employed to supply the lubricating oil, as well as the seals used to contain the oil in the housing and to exclude contaminants such as cooling water and mill scale, are all well known to those skilled in the art. Consequently, in the interest of simplicity, these components and seals have not been illustrated in the drawings.

As product is rolled between the rolls A, the rolling load will cause the roll shafts B to deflect as diagrammatically depicted in exaggerated form in Figure 2A. Because each of the tandem second bearings $D_a$, $D_b$ is

- 9 -   0180326

free to self adjust its position relative to its respective carrier member F, and because the carrier members F are also free to rotatably self adjust their positions relative to their respective supports G, the bearings $D_a$, $D_b$ will readily accommodate both changes in shaft deflection and slope.

In the embodiment shown in Figures 3-8, the tandem second bearings $D_a$, $D_b$ are each slidably adjustable relative to their respective carrier members F about axes $A_3$ lying on and extending transversely across the rotational axes of the roll shafts B. By the same token, the carrier members F are slidably adjustable relative to their respective supports E about axes $a_4$ contained in the reference plane $P_1$. By appropriately positining the axes $a_3$ and the plane $P_1$ with respect to the tandem bearings $D_a$, $D_b$ each tandem bearing can be made to carry approximately an equal portion of the rolling load. This positioning will be approximately mid-way between the bearings $D_a$, $D_b$. The cooperative engagement of the trunnions 34 with the carrier members H allows the first bearings C to accommodate changes in shaft slope by rotating about axes $a_5$. The axes $a_3$, $a_4$ and $a_5$ are parallel.

The manner of providing relative self adjusting movement between the tandem bearings $D_a$, $D_b$ and the carrier members F, as well as between the carrier members F and their supports G, is not limited to that described previously. For example, as shown greatly exaggerated in Figure 9, in order to minimise frictional resistance in the system, it is preferable, and indeed in many cases it may be necessary to define the interfaces between the chocks 18 and the carrier F and between the carrier and the support G by curved surfaces having different radii. This provides rolling contact at 58 as well as at 60, yet still afford captive relationships between the chocks 18, carrier member F and support G. As with the previously described embodiment, the separate bearings 16 each absorb approximately an equal share of the load, the carrier F is rotatably adjustable about an axis which extends transversely with respect to that of the shaft B and approximately midway between the separate bearings, and the separate bearings are each rotatable relative to the carrier about axes parallel to the rotatable carrier axis.

The many advantages of the present invention will now be apparent to those skilled in the art. As previously mentioned, the use of self adjustable tandem bearings $D_a$, $D_b$ provides a significant increase in rolling capacity on the order of 90%. The inboard location of the tandem bearings does not interfere with removal and replacement of worn or cracked work rolls. The tandem bearings are enclosed by the housing E and thus are protected from contamination by cooling water, mill scale, etc. The arrangement of the tandem bearings $D_a$, $D_b$ and the bearings C readily accommodates symmetrical roll parting adjustments.

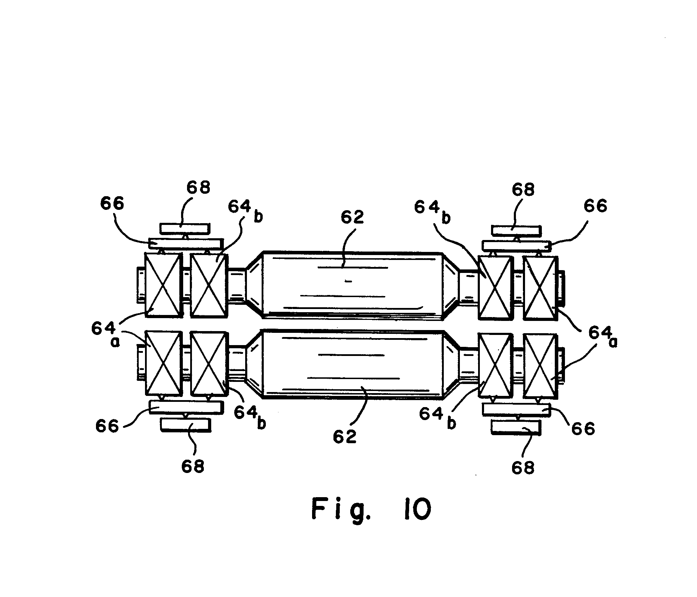

Also, it should be understood that the concepts of the present invention may be applied to straddle mounted mills. For example, as illustrated diagrammaticaly in Figure 10, rolls 62 may have their necks journalled in tandem sets of bearings 64a, 64b. The bearings of each tandem set are mounted for independent self adjusting movement on carrier members 66, which in turn are mounted for self adjusting movement on supports 68. Here, again, the bearings will be free to accommodate both deflection and accompanying changes in slope of the rolls occasioned by the imposition of rolling loads.

Various changes and modifications may be made to the illustrated embodiments without departing from the scope of the invention as defined by the appended claims. For example, although the bearings $D_a$, $D_b$ and C are described as being of the sleeve-type, other bearings including roller bearings might be employed. Other types of roll parting adjustment mechanism, drives, and housing designs are also possible.

CLAIMS

1.    An overhung rolling mill stand having a bearing arrangement for a roll shaft with a work roll mounted adjacent to one end thereof, the bearing arrangement comprising a first bearing (C) positioned adjacent to the other end of the shaft (B), and characterised by tandem second bearings ($D_a$, $D_b$) positioned between the work roll (A) and the first bearing (C); and self adjustable carrier means (F) for carrying the second bearings ($D_a$, $D_b$) and for permitting the second bearings to roll on the carrier means (F) while accommodating deflection of the shaft (B) occasioned by loads applied to the work roll (A).

2.    A rolling mill stand according to claim 1, wherein the first bearing (C) absorbs a portion of the load, and wherein the tandem second bearings ($D_a$, $D_b$) each absorb approximately an equal share of the remainder of the load.

3.    A rolling mill stand according to claim 1 or claim 2 wherein there are two of the tandem second bearings ($D_a$, $D_b$), and wherein the self adjustable carrier means (F) is rotatable about an axis ($P_1$) which extends transversely with respect to the shaft (B) and approximately midway between the tandem second bearings ($D_a$, $D_b$).

4.    A rolling mill stand according to claim 3 wherein the second tandem bearings ($D_a$, $D_b$) are each rotatable relative to the self adjustable carrier means (F) about axes parallel to the first mentioned axis ($P_1$).

5.    A rolling mill stand according to any one of the preceding claims further comprising means (H) for carrying the first bearing (C) in a manner permitting the first bearing to movably accommodate changes in a shaft slope occasioned by rolling loads applied to the work roll (A).

6. An overhung rolling mill stand, comprising: a pair of roll shafts (B); first bearings (C) rotatably supporting each of the shafts (B) at a first location adjacent to one end thereof; work rolls (A) mounted on the shafts (B) at second locations adjacent to the opposite ends thereof; and characterised by tandem pairs of second bearings ($D_a$, $D_b$) being arranged between the first and second locations; first and second carrier means (H, F) for respectively carrying the first bearings (C) and the tandem pairs of second bearings ($D_a$, $D_b$) the second carrier means (F) being arranged on respective supports (G); means (16,18) for permitting the first and second bearings ($D_a$, $D_b$) to roll independently of each other relative to their respective carrier means (F) in response to changes in the slopes of the said shafts (B); means for permitting the second carrier means (F) to roll on their supports (G) in response to deflections of the shafts (B), and means (52, 54, 56) for driving the roll shafts (B).

7. The rolling mill stand of claim 6 further comprising means (26) for symmetrically shifting the roll shafts (B) in opposite directions in order to vary the parting between the work rolls (A) mounted thereon.

8. The rolling mill stand of claim 6 or claim 7 wherein the means (52, 54, 56) for driving the roll shafts (B) includes first gears (52) mounted on the roll shafts (B) between the first (C) and second (D) bearings, second gears (54) arranged on intermediate drive shafts (56) parallel to the roll shafts (B), the second gears (54) being in meshed engagement with each other, and each second gear (54) being in meshed engagement with a

- 14 -    0180326

respective one of the first gears (52).

9.    The rolling mill stand according to any one of the claims 6 to 8 wherein the second carrier means (F) are rotatable about axes which extend transversely with respect to the roll shafts (B) at a position selected to substantially equalise the rolling load carried by the second bearings of each tandem pair.

10.    The rolling mill stand of claim 9 wherein the tandem second bearings ($D_a$, $D_b$) are each rotatable relative to their respective second carrier means about axes parallel to said first mentioned axes.

11.    The rolling mill stand of claim 7 wherein the adjustment means (26) comprises an adjusting shaft (26) associated with an extending in parallel relationship to each roll shaft (B), each adjusting shaft (26) having eccentrics (24, 40) mechanically connected to the first and second carrier means (H,F) and means (45) for simultaneously rotating the adjustment shafts.

12.    The rolling mill stand of claim 11 wherein the rotational axes of the adjustment shafts (26) are on opposite sides of and laterally spaced from a reference plane containing the rotational axes of said roll shafts (B), and wherein the centres of the eccentrics are contained within the plane.

13.    The rolling mill stand of claim 12 wherein the eccentrics of one adjusting shaft are $180^\circ$ out of phase with respect to the eccentrics on the other adjusting shaft.

14.    The rolling mill stand according to any one of claims 11, 12 or 13 further comprising means for mechanically interconnecting the adjusting shafts (26) in a manner such that rotation of one adjusting shaft in one direction is accompanied by simultaneous rotation of the other adjusting shaft in the same direction.

15.    An overhung rolling mill stand, comprising: a pair of roll shafts (B);  a first bearing (C) rotatably supporting each roll shaft (B) at a first location adjacent to one end thereof;  a work roll (A) mounted on each roll shaft (B) at a second location adjacent to the opposite end thereof; and characterised by a tandem pair of second bearings ($D_a$, $D_b$) rotatably supporting each roll shaft (B) at locations between the first and second locations;  a carrier member (F) carrying each tandem pair of second bearings;  means for permitting each carrier member (F) to move about a first axis contained in a reference plane which extends transversely with respect to the roll safts (B);  means permitting each second bearing ($D_a$, $D_b$) for symmetrically adjusting the roll shafts (B) in opposite directions transverse to their respective rotational axis; and means (52, 54, 56) for driving the roll shafts (B).

16.    A bearing arrangement for a rotatable element such as, for example, a roll shaft or straddle mounted roll in a rolling mill stand, the bearing arrangement comprising: first and second bearing assemblies (C,D) for supporting the rotatable element (B) at spaced locations along the length thereof, at least one of the bearing assemblies (D) including separate bearings ($D_a$, $D_b$) arranged in tandem on a carrier (F) which in turn is located on a support (G), characterised in that the interfaces between the separate bearings ($D_a$, $D_b$) and the carrier (F) and between the carrier (F) and the support (G) are defined by curved surfaces (58,60) having different radii.

17.    The bearing arrangement of claim 16, wherein the separate bearings each absorb approximately an equal share of a portion of the load on the rotatable element.

18.    The bearing arrangement of claim 17 wherein there are two of the tandem separate bearings, and wherein the carrier is rotatable about an axis which extends transversely with respect to the rotatable element and approximately midway between the tandem separate bearings.

19.    The bearing arrangement of claim 18 wherein the second separate bearings are each rotatable relative to the carrier about axes parallel to the first mentioned axis.

0180326

Fig. 1

Fig. 2

Fig. 2A

0180326

Fig. IA

Fig. 9

**Fig. 3**

Fig. 7

Fig. 4

0180326

4/7

Fig. 6

Fig. 5

0180326

Fig. 8

Fig. 10